# EUROPEAN PATENT SPECIFICATION

(11) **EP 4 431 890 B1**
(45) Date of publication and mention of the grant of the patent: **13.05.2026**
(21) Application number: 23161939.6
(22) Date of filing: 15.03.2023
(51) Int. Cl.: G01K 15/00, G01L 27/00, G06V 10/62, G06V 20/20

(54) **METHOD AND SYSTEM FOR RECALIBRATING PLURALITY OF SENSORS IN TECHNICAL INSTALLATION**
VERFAHREN UND SYSTEM ZUR REKALIBRIERUNG MEHRERER SENSOREN IN EINER TECHNISCHEN ANLAGE
PROCÉDÉ ET SYSTÈME DE RÉÉTALONNAGE D'UNE PLURALITÉ DE CAPTEURS DANS UNE INSTALLATION TECHNIQUE

(43) Date of publication of application: 18.09.2024
(73) Proprietor: Siemens Aktiengesellschaft, 80333 München (DE)
(72) Inventor: GANAPATHY, Karthik, 605107 Puducherry (IN); KANNAPPAN, Sathishkumar, 560083 Bangalore, Karnataka (IN); S, Gobikumar, 639002 Tamil Nadu (IN); V, Yugesh Kumar, 613005 Thanjavur, Tamilnadu (IN)
(74) Representative: Isarpatent

(56) References cited:
- CN-A- 106 525 334
- CN-A- 111 504 513
- JP-A- H0 682 267
- KR-A- 20200 109 508
- US-A1- 2020 048 992

## Description

The present invention relates to a field of sensor recalibration, and more particularly relates to a method and system for recalibrating a plurality of sensors in a technical installation.

A technical installation such as an industrial plant comprises a plurality of sensors which capture a plurality of readings from one or more portions of the technical installation. The plurality of readings are received by a controller device to determine an operational status of the technical installation. Examples of the plurality of sensors include, but is not limited to a temperature sensor, a pressure sensor, and a vibration sensor. Each sensor of the plurality of sensors is configured to capture a first reading associated with a specific parameter of one or more processes of a plurality of processes running in the technical installation. Each sensor of the plurality of sensors degrade in performance over time. In one example, a sensor of the plurality of sensors becomes uncalibrated over time. Thus, the plurality of sensors have to be regularly recalibrated to a specific industrial standard.

Conventionally, an engineer manually compares a reading of a sensor with a reading of a standard measurement device to determine a calibration error of the sensor. The engineer further compares the determined calibration error with an accepted margin of calibration error of the sensor. The accepted margin of calibration error of a sensor depends on a criticality of the plurality of processes of which the sensor measures readings. For example, a first sensor associated with a critical process has an accepted margin of calibration error which is lower than an accepted margin of calibration error of a second sensor associated with a non-critical process. The engineer requires a high degree of expertise in order to determine the accepted margin of error for each sensor of the plurality of sensors.

If the sensor is recalibrated when a calibration error of the sensor is lesser than the accepted margin of calibration error of the sensor, a wastage of time, money and labor occurs. Thus, the sensor should be calibrated only when the calibration error is greater than the accepted margin of calibration error of the sensor.

The technical installation comprises thousands of such sensors which have to be recalibrated. Thus, manual recalibration of the plurality of sensors is a humongous task because of a sheer number of sensors in the technical installation. Thus, recalibration of the plurality of sensors requires a large amount of labor, time, and expertise.

CN 111 504 513 A discloses a calibration method for a digital display thermometer based on an intelligent mobile terminal. JP H06 82267 A discloses a sensor for measuring a variety of physical variables and having a function of particular correcting the temperature drift. KR 2020 0109508 A discloses a sensor module capable of automatically correcting a sensing value.

In light of the above, there exists a need for an efficient and cost-effective method and system for recalibration of a plurality of sensors in a technical installation. Therefore, it is an object of the present invention to provide a method and system for recalibration of a plurality of sensors in a technical installation.

The object of the invention is achieved by a method for recalibration of a plurality of sensors in a technical installation having the features of claim 1 and a system having the features of claim 12. The technical installation is at least one of a manufacturing plant, a power plant or a waste processing plant. The technical installation has a plurality of devices which are configured to perform a specific functionality such as manufacturing products and generating energy.

The technical installation further comprises a plurality of sensors which are configured to capture a plurality of readings from a plurality of processes in the technical installation. The captured plurality of readings are transmitted to a controller device to determine an operational status of the technical installation. Examples of the plurality of sensors include, but is not limited to a temperature sensor, a pressure sensor, and a vibration sensor. For example, each sensor of the plurality of sensors is configured to capture a first reading associated with a specific parameter of a specific portion of the technical installation. In one example, the specific parameter is a temperature parameter. Furthermore, the specific portion of the technical installation is at least one of a pipe, a container, or a furnace in the technical installation. Each sensor of the plurality of sensors degrade in performance over time. In one example, a sensor of the plurality of sensors become uncalibrated over time.

To calibrate each sensor of the plurality of sensors, a user attaches a standard measurement device to each sensor of the plurality of sensors and capture a second reading associated with the specific parameter, from the specific portion. The standard measurement device is a measurement sensor which is calibrated to a specific standard. In one example, the specific standard is standardized to International system of standards. Thus, the standard measurement device and the specific sensor of the plurality of sensors are configured to determine the first reading and the second reading of the same parameter from the same portion of the technical installation, concurrently.

In a preferred embodiment, the method further comprises receiving, by a processing unit, a plurality of calibration data items associated with each sensor of the plurality of sensors. The plurality of calibration data items comprises information associated with each calibration cycle of a plurality of calibration cycles of the plurality of sensors. Information associated with each calibration cycle of each sensor comprises a plurality of historical sensor readings, a plurality of historical standard measurement device readings, and a plurality of recorded calibration error of each sensor of the plurality of sensors during each calibration cycle of the plurality of calibration cycles. The plurality of historical sensor readings comprises measurements taken by each sensor of the plurality of sensors during each calibration cycle of the plurality of calibration cycles. The plurality of historical standard measurement device readings comprises measurements taken by the standard measurement device during each calibration cycle of the plurality of calibration cycles.

The plurality of calibration data items further comprises a date of calibration, a difference in value between the plurality of historical sensor readings and the plurality of historical standard measurement device readings. The plurality of calibration data items further comprises a plurality of feedback signals used to calibrate each sensor of the plurality of sensors during the plurality of calibration cycles.

Information associated with each calibration cycle of each sensor further comprises an accepted margin of calibration error for each sensor of the plurality of sensors, and a data model associated with each sensor of the plurality of sensors. The plurality of calibration data items further comprises information associated with a plurality of feedback signals used by a plurality of users to recalibrate each sensor of the plurality of sensors during each calibration cycle of the plurality of calibration cycles.

In one example, the plurality of users recalibrate each sensor of the plurality of sensors by inputting at least one feedback signal of the plurality of feedback signals to a calibration port of the sensor. The data model associated with each sensor of the plurality of sensors comprises an interrelationship between an input signal and an output signal of the sensor and one or more feedback signals used to recalibrate the sensor. In one example, the data model comprises at least one of a linear function or a non-linear function which describes relationship between the input signal, the feedback signal, the calibration error and the output signal of each sensor of the plurality of sensors.

The plurality of calibration data items further comprises information associated with an accepted margin of calibration error associated with each sensor of the plurality of sensors. The accepted margin of calibration error is a preset threshold.

In the preferred embodiment, the method further comprises training, by the processing unit, an artificial intelligence model to determine a calibration error of each sensor of the plurality of sensors. The artificial intelligence model is trained by use of a training dataset comprising the received plurality of calibration data items. In one example, the artificial intelligence model is trained to determine that one or more sensors of the plurality of sensors is in an uncalibrated state. The artificial intelligence model is trained using at least one of supervised learning or a non supervised learning method. Advantageously, the artificial intelligence model is trained based on the plurality of calibration data items associated with the plurality of calibration cycles of the plurality of sensors of the technical installation.

In one example, the training dataset comprises a past calibration date for each sensor of the plurality of sensors. The past calibration data of a sensor is indicative of a date at which a recalibration of the sensor is performed in the past. The artificial intelligence model is configured to determine a future calibration date for each sensor of the plurality of sensors based on the past calibration date of the sensor and further based on determination that the sensor is in the uncalibrated state. The future calibration date of a sensor is indicative of a date on which the sensor should be recalibrated in the future.

The artificial intelligence model is further trained to generate a feedback signal to recalibrate an uncalibrated sensor of the plurality of sensors. In one example, the artificial intelligence model is trained using at least one of a supervised learning technique or an unsupervised training technique.

In one example, the artificial intelligence model is a K-nearest neighbor (KNN) algorithm. The KNN algorithm is configured to store the plurality of calibration data items and to classify one or more calibration data items in the plurality of calibration data items. The KNN algorithm is further configured to determine a distance of each calibration data item of the plurality of calibration data items, to other calibration data items of the plurality of calibration data items. The distance is calculated based on at least one of a Euclidean distance measurement method, a Manhattan distance measurement method and a Hamming distance measurement method. The KNN algorithm is configured to classify the one or more calibration data items as "abnormal" or normal based on the calculated distance.

For example, the KNN algorithm is configured to analyze the plurality of calibration data items to determine one or more abnormal values in the plurality of calibration data items. The KNN algorithm is further configured to determine a degree of abnormality of each of the determined one or more abnormal values associated with each sensor of the plurality of sensors. In one example, the degree of abnormality is derived from the calculated distance between the one or more abnormal values to other calibration data items of the plurality of calibration data items.

The KNN algorithm is further configured to receive a first reading captured by a sensor of the plurality of sensors and determine a degree of abnormality of the first reading. If the degree of abnormality of the first reading is greater than a threshold, then the KNN algorithm is configured to determine that the sensor is in an uncalibrated state. If the degree of abnormality of the first reading is lesser than the threshold, then the KNN algorithm is configured to determine that the sensor is in a calibrated state. The KNN algorithm is further configured to determine a calibration error for each sensor of the plurality of sensors based on an analysis of the first reading and a second reading captured by the standard measurement device.

The KNN algorithm is further configured to analyze the plurality of feedback signals in the plurality of calibration data items. The KNN algorithm is further configured to determine a plurality of patterns between the plurality of historical sensor readings and the plurality of feedback signals. The KNN algorithm is further configured to use at least one of a linear regression and a non-linear regression based predictive methods to generate a feedback signal for the first reading of the sensor. In other words, the KNN algorithm is further trained to analyze the determined calibration error to generate a feedback signal to recalibrate a specific sensor of the plurality of sensors, after determination of the calibration error of the specific sensor.

In a preferred embodiment, the method comprises receiving, by the processing unit, a first image of a sensor of the plurality of sensors. The first image of the sensor is captured by an image capture device such as a camera. In one example, the first image is captured from a first display associated with the sensor. The display is at least one of an analogue display or a digitaldisplay.

The method further comprises analysing, by the processing unit, the first image based on an application of an image processing algorithm on the first image. In one example, the display is a digital display. In such a case, the image processing algorithm is a optical character recognition algorithm such as an intelligent word recognition algorithm, an intelligent character algorithm, and an optical mark recognition algorithm. The image processing algorithm is configured to analyze the first image to determine a first reading associated with the sensor. In another example, the display is an analogue display. In such a case, the image processing algorithm is a deep learning algorithm configured to determine the first reading displayed by the analogue display.

In a preferred embodiment, the method comprises receiving, by the processing unit, a second image of the standard measurement device. The second image of the standard measurement device is captured by the image capture device from a second display which is associated with the standard measurement algorithm. The second display is at least one of an analogue display or a digitaldisplay. The method further comprises analysing, by the processing unit, the second image based on an application of the image processing algorithm on the second image. The image processing algorithm is configured to determine a second reading associated with the standard measurement device. In one example, the first image and the second image are specific portions of a third image which encompasses the sensor and the standard measurement device. In one example, the third image is captured by a closed circuit television camera installed in the technical installation. In such a case, the method comprises segmenting the first image and the second image from the third image by application of an image segmentation algorithm on the third image. Examples of the image segmentation algorithms comprise, but is not limited to Edge-Based Segmentation algorithm, a Threshold-Based Segmentation algorithm, a Region-Based Segmentation algorithm, a Cluster-Based Segmentation algorithm, and a Watershed Segmentation algorithm.

Advantageously, the first reading and the second reading are read by the processing unit without human intervention. Thus, a level of expertise required for the user, to determine the first reading and the second reading is drastically reduced. Furthermore, the processing unit 202 is enabled to read the first reading and the second reading at a faster pace than the user. Hence, advantageously, a sensor recalibration process performed within minimal time.

In the preferred embodiment, the method further comprises analysing, by the processing unit, the first reading and the second reading by application of the trained artificial intelligence model on the first reading and the second reading. The artificial intelligence model is configured to analyse the first reading and the second reading to determine whether the sensor is in a calibrated state or an uncalibrated state.

In the preferred embodiment, the method further comprises determining, by the processing unit, a calibration error for the sensor based on the analysis of the first reading and the second reading. In one example, the calibration error indicates a difference between the first reading and the second reading. In another example, the calibration error is indicative of a degree of abnormality of the first reading. The calibration error for the sensor is determined by application of the trained artificial intelligence model on the first reading and the second reading. Advantageously, the calibration error is determined by the processing unit, rather than the user. Thus, time and effort required by the user to determine the calibration error is reduced drastically.

In the preferred embodiment, the method is further configured to determine, by the processing unit, whether the sensor is in an uncalibrated state, based on the analysis of the first reading and the second reading by application of the artificial intelligence model. In one example, the KNN algorithm is configured to determine whether the sensor is in the calibrated state or the uncalibrated state based on the analysis of the first reading and the second reading. Advantageously, a calibration state of the sensor is determined by the processing unit, rather than the user. Thus, a level of expertise required by the user is reduced.

In one example, the artificial intelligence model is configured to compare the first reading and the second reading to determine the calibration error of the sensor. The artificial intelligence algorithm is further configured to compare the calibration error with an accepted margin of calibration error of the sensor. If the calibration error of the sensor is greater than the accepted margin of calibration error of the sensor, the artificial intelligence model is configured to determine the sensor to be in the uncalibrated state.

In the preferred embodiment, the method further comprises outputting, by the processing unit, in a case where the sensor is determined to be in the uncalibrated state, a notification to a user that the sensor is the uncalibrated state. The notification is at least one of an audio-based, a text based, a video based, and a haptic notification. Advantageously, the user is notified of the uncalibrated state of the sensor, so that the user is enabled take one or more measures to rectify the calibration error in the sensor of the plurality of sensors of the technical installation.

The method further comprises determining, by the processing unit, a calibration date for the sensor based on the determination that the sensor is in the uncalibrated state. In one example, the plurality of calibration data items comprises a calibration schedule associated with the plurality of calibration cycles of the plurality of sensors. In such a case, the calibration date is determined based on a calibration schedule associated with the plurality of sensors in the technical installation. Advantageously, the processing unit is configured to predict a future calibration date for the sensor based on the past calibration date and the calibration error of the sensor.

In the preferred embodiment, the method further comprises determining, by the processing unit, a first deviation between at least one historical sensor reading of the plurality of historical sensor readings, and at least one historical standard measurement device reading from the plurality of calibration data items. The method further comprises determining, by the processing unit, a second deviation between the first reading of the sensor and the second reading of the standard measurement device. The method further comprises comparing the first deviation to the second deviation to determine whether the first reading is greater than the second reading. The processing unit is configured to predict an optimal calibration date for the sensor based on an application of the artificial intelligence model on the first deviation and the second deviation.

In the preferred embodiment, the method further comprises generating, by the processing unit, a calibration feedback signal based on an application of the artificial intelligence model on the first reading and the second reading, and further based on the plurality of calibration data items. The method further comprises transmitting, by the processing unit, the generated feedback signal to the sensor of the plurality of sensors to recalibrate the sensor.

In one example, the plurality of calibration data items comprises a plurality of instructions to recalibrate each sensor of the plurality of sensors. In such a case, the method further comprises determining, by the processing unit, one or more instructions from the plurality of instructions such that the determined one or more instructions are associated with the sensor of the plurality of sensors. The determine one or more instructions enable a user to recalibrate the sensor. The method further comprises displaying, by the processing unit, the determined one or more instructions for the user via a display screen. Advantageously, the user is automatically instructed on a procedure to recalibrate the sensor based on the determination that the sensor is in the uncalibrated state.

In one example, a plurality of processes run in the technical installation. The plurality of sensors in the technical installation are configured to measure a plurality of parameters associated with the plurality of processes. Thus each sensor of the plurality of sensors is associated with a specific process of the plurality of processes of the technical installation. In one example, the artificial intelligence algorithm is configured to determine the degree of abnormality associated with the first reading. The method further comprises comparing, by the processing unit, the degree of abnormality associated with the sensor with at least one threshold. In a case where the degree of abnormality associated with the deviation is greater than the at least one threshold, then the processing unit is configured to initiate a process interlock process for at least one process associated with the sensor of the plurality of sensors of the technical installation.

The process interlock process is configured to interlock the at least one process which is associated with the sensor of the plurality of sensors of the technical installation. Advantageously, a risk factor associated with running the at least one process with an uncalibrated sensor is eliminated.

The method further comprises determining, by the processing unit, a rate of degradation of a number of readings of the sensor based on an analysis of the plurality of calibration data items. The method further comprises determining, by the processing unit, whether the determine rate of degradation is greater than a threshold. The method further comprises notifying, by the processing unit, a user to perform predictive maintenance on the sensor based on the determination that the rate of degradation is greater than the threshold.

The method further comprises receiving, by the processing unit, a first location of the sensor of the plurality of sensors of the technical installation. In one example, the location of each sensor is received from a global positioning system module in each sensor of the plurality of sensors. The method further comprises receiving, by the processing unit, a second location of a user in the technical installation. The method further comprises generating, by the processing unit, a navigation path from the second location of the user to the first location of the uncalibrated sensor. The method further comprises displaying, by the processing unit, the generated navigation path on a display device. In one example, the display device is an augmented reality based display device such as an augmented reality headset. The method further comprises displaying, by the processing unit, a marker on a visor of the augmented reality headset. The marker indicates a location of the uncalibrated sensor in the technical installation. Advantageously, a user who is engaged in a process of sensor recalibration is enabled to easily identify the uncalibrated sensor of the plurality of sensors.

In one example, the technical installation has a plurality of visual markers, such as QR code based markers, installed within one or more portions of the technical installations. The plurality of visual markers are indicative of specific locations within the technical installation. The augmented reality headset is configured to capture an image of the one or more portions of the technical installation via a camera in the augmented reality headset. The augmented reality headset is further configured to detect at least one visual marker in the captured image by application of an image recognition algorithm on the image.

In a preferred embodiment, the method comprises receiving, by the processing unit, an image from an augmented reality headset. The method further comprises determining, by the processing unit, the sensor in the image based on an application of an object detection algorithm on the received image. The method further comprises displaying, by the processing unit, a notification that the sensor is in the uncalibrated state based on the determination that the sensor is in the uncalibrated state.

In the preferred embodiment, the method comprises receiving, by the processing unit, a calibration data item associated with the sensor from the plurality of calibration data items associated with the plurality of sensors. The method further comprises validating, by the processing unit, the received calibration data item by application of the artificial intelligence algorithm on the received calibration data item. Advantageously, the processing unit is configured to validate an outcome of one or more sensor recalibration processes which are performed by the user.

The object of the present invention is also achieved by an industrial control system for recalibrating a plurality of sensors in a technical installation. The industrial control system comprises a processing unit and a memory coupled to the processing unit. The memory comprises a sensor recalibration module stored in the form of machine-readable instructions executable by the processor. The sensor recalibration module is configured for performing the method as described above.

The object of the present invention is also achieved by an industrial environment having the features of the claim 13. The industrial environment comprising an industrial control system, a technical installation comprising one or more physical components and a plurality of human machine interfaces communicatively coupled to the industrial control system and the technical installation. The industrial control system is configured to perform the above- described method steps.

The object of the present invention is also achieved by a computer-program product having machine-readable instructions stored therein, that when executed by one or more processor(s), cause the one or more processor(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable of recalibrating a plurality of sensors, according to an embodiment of the present invention;
- FIG 2: is a block diagram of an industrial control system, such as those shown in FIG. 1, in which an embodiment of the present invention can be implemented;
- FIG 3: is a block diagram of a sensor recalibration module, such as those shown in FIG 2, in which an embodiment of the present invention can be implemented; and
- FIGS 4A-D: is a process flowchart illustrating an exemplary method of recalibrating a plurality of sensors in a technical installation, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

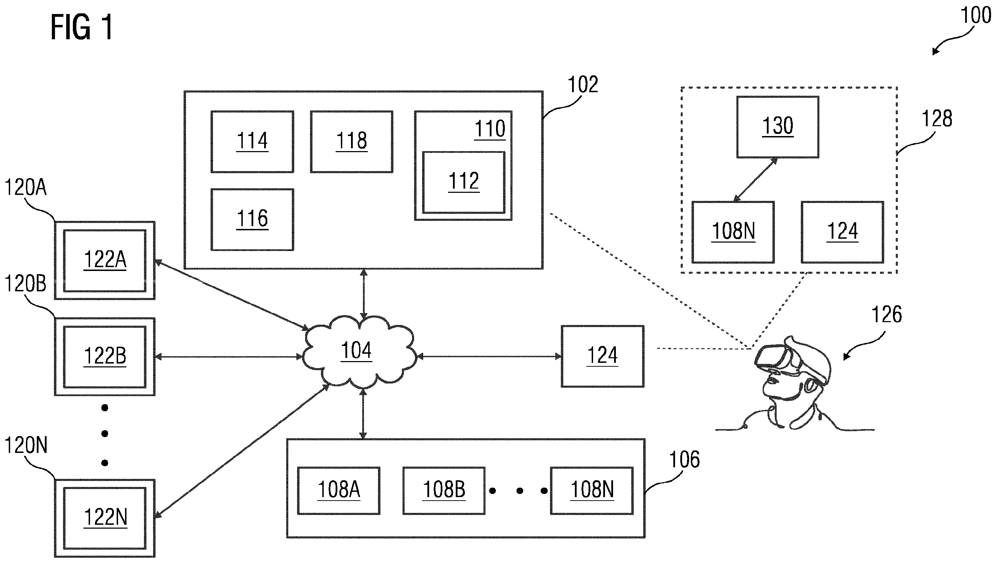

FIG 1 is a block diagram of an industrial environment 100 capable of recalibrating a plurality of sensors 108A-N of a technical installation 106, according to an embodiment of the present invention. In FIG 1, the industrial environment 100 includes an industrial control system 102, a technical installation 106 and a plurality of human machine interfaces 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The industrial control system 102 is communicatively connected to the technical installation 106 via a network connection 104 (such as Local Area Network (LAN), Wide Area Network (WAN), Wi-Fi, Internet, any short range or wide range communication). The industrial control system 102 is also connected to the plurality of human machine interfaces 120A-N via the network connection 104.

The industrial control system 102 is connected to a plurality of sensors 108A-N in the technical installation 106 via the network connection 104. The plurality of sensors 108A-N includes but is not limited to a temperature sensor, a pressure sensor, and a vibration sensor. In one example, the plurality of sensors 108A-N are connected to each other or several other components (not shown in FIG 1) via physical connections. The physical connections may be through wiring between the plurality of sensors 108A-N. Alternatively, the plurality of sensors 108A-N are connected via non-physical connections (such as Internet of Things (IOT)) and 5G networks. Although FIG 1 illustrates the industrial control system 102 connected to one technical installation 106, one skilled in the art can envision that the industrial control system 102 can be connected to several technical installations located at different geographical locations via the network connection 104.

The plurality of human machine interfaces 120A-N may be a desktop computer, laptop computer, tablet, smart phone and the like. Each of the plurality of human machine interfaces 120AN is provided with an engineering tool 122A-N for generating and/or editing engineering programs respectively. The plurality of human machine interfaces 120A-N can access the industrial control system 102 recalibrating the plurality of sensors 108A-N. For example, each of the plurality of human machine interfaces 120A-N enables a user to transmit a calibration feedback signal to each of the plurality of sensors 108A-N to recalibrate the plurality of sensors 108A-N.

The plurality of human machine interfaces 120A-N can access cloud applications (such as providing performance visualization of the technical installation 106 via a web browser). Throughout the specification, the terms "human machine interface", "client device" and "user device" are used interchangeably. One or more of the plurality of human machine interfaces 120A-N are further configured to receive a plurality of user actions from a plurality of users. The plurality of user actions comprises user inputs, user commands, user gestures, programming instructions, and user passwords. The plurality of user actions are entered by the plurality of users to perform one or more tasks on the plurality of sensors 108AN.

It is noted that the industrial control system 102 further comprises a standard measurement device 124 which is removably attached to one or more sensors of the plurality of sensors 108A-N. The standard measurement device 124 is a sensor which is calibrated to a specific industrial standard. A user uses the standard measurement device 124 to determine calibration errors in the plurality of sensors 108A-N.

In one example, the user uses an augmented reality headset 126 to view each sensor of the plurality of sensors 108A-N and the standard measurement device 124. The augmented reality headset 126 comprises an image capture device such as a camera configured to capture an image from a field of view of the user. In one example, the captured image comprises a first portion comprising an image of a sensor of the plurality of sensors 108A-N and a second portion comprising an image of the standard measurement device 124.

The industrial control system 102 may be a standalone server deployed at a control station or may be a remote server on a cloud computing platform. In a preferred embodiment, the industrial control system 102 may be a cloud-based industrial control system. The industrial control system 102 is capable of delivering applications (such as cloud applications) for recalibrating the plurality of sensors 108A-N in the technical installation 106. The industrial control system 102 may comprise a digitalization platform 110 (such as a cloud computing platform), a sensor recalibration module 112, a server 114 including hardware resources and an operating system (OS), a network interface 116 and a database 118. The network interface 116 enables communication between the industrial control system 102, the technical installation 106, the plurality of human machine interfaces 120A-N, the plurality of sensors 108A-N. The interface, for example, a cloud interface (not shown in FIG 1) may allow the engineers at the technical installation 106 to access the plurality of sensors 108A-N and recalibrate the plurality of sensors 108A-N.

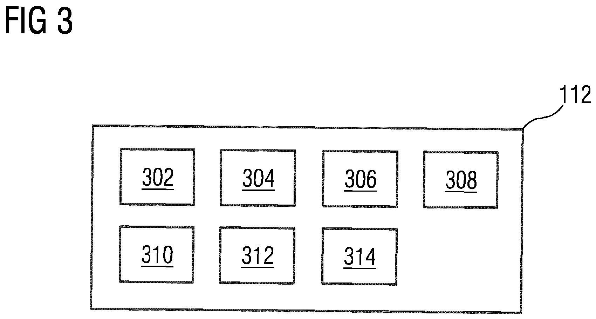

The server 114 includes one or more servers on which the OS is installed. The server 114 may comprise one or more processors, one or more storage devices, such as, memory units, for storing data and machine-readable instructions for example, applications and application programming interfaces (APIs), and other peripherals required for providing computing (such as cloud computing) functionality. In one example, the digitalization platform 110 may be implemented in the server 114. The digitalization platform 110 enables functionalities such as data reception, data processing, data rendering, data communication, etc. using the hardware resources and the OS of the server 114 and delivers the aforementioned services using the application programming interfaces deployed therein. The digitalization platform 110 comprises a combination of dedicated hardware and software built on top of the hardware and the OS. In an exemplary embodiment, the digitalization platform 110 may correspond to an Integrated Development Environment (IDE) comprising program editors and compilers which allow the users of the plurality of human machine interfaces 120A-N to generate engineering programs. The digitalization platform 110 may further comprise the sensor recalibration module 112 configured for enabling recalibration of the plurality of sensors 108A-N in the technical installation 106. Details of the sensor recalibration module 112 is explained in FIG. 3.

The database 118 stores the information relating to the technical installation 106, the plurality of sensors 108A-N, the plurality of human machine interfaces 120A-N. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the digitalization platform 110. The database 118, according to another embodiment of the present invention, is a location on a file system directly accessible by the sensor recalibration module 112.

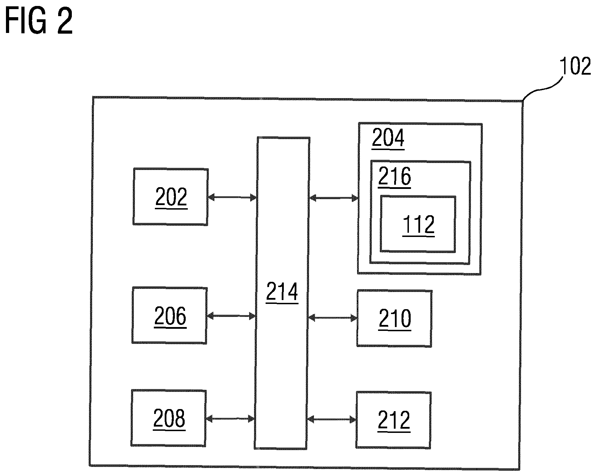

FIG 2 is a block diagram of an industrial control system 102, such as those shown in FIG 1, in which an embodiment of the present invention can be implemented. In FIG 2, the industrial control system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes the sensor recalibration module 112 stored in the form of machine-readable instructions on any of the above-mentioned storage media and may be in communication with and executed by the processing unit 202.

When executed by the processing unit 202, the sensor recalibration module 112 causes the processing unit 202 to receive a plurality of calibration data items associated with each sensor of the plurality of sensors 108A-N.

The plurality of calibration data items comprises information associated with each calibration cycle of a plurality of calibration cycles of the plurality of sensors 108A-N. Information associated with each calibration cycle of each sensor comprises a plurality of historical sensor readings, a plurality of historical standard measurement device readings, and a plurality of recorded calibration error of each sensor of the plurality of sensors during each calibration cycle of the plurality of calibration cycles. The plurality of historical sensor readings comprises measurements taken by each sensor of the plurality of sensors during each calibration cycle of the plurality of calibration cycles. The plurality of historical standard measurement device readings comprises measurements taken by the standard measurement device during each calibration cycle of the plurality of calibration cycles of the plurality of sensors 108A-N.

The plurality of calibtration data items further comprises a date of calibration, a difference in value between the plurality of historical sensor readings and the plurality of historical standard measurement device readings. The plurality of calibration data items further comprises a plurality of feedback signals used to calibrate each sensor of the plurality of sensors 108A-N during the plurality of calibration cycles.

Information associated with each calibration cycle of each sensor further comprises an accepted margin of calibration error for each sensor of the plurality of sensors 108A-N. The plurality of calibration data items further comprises a data model associated with each sensor of the plurality of sensors 108A-N. The plurality of calibration data items further comprises information associated with a plurality of feedback signals used by a plurality of users to recalibrate each sensor of the plurality of sensors 108A-N during each calibration cycle of the plurality of calibration cycles.

In one example, the plurality of users recalibrate each sensor of the plurality of sensors by inputting at least one feedback signal of the plurality of feedback signals to a calibration port of the sensor. The calibration port of each sensor is an input port configured to receive one or more feedback signals to recalibrate the sensor. The data model associated with each sensor of the plurality of sensors 108A-N comprises an interrelationship between an input signal and an output signal of the sensor and the one or more feedback signals used to recalibrate the sensor. In one example, the data model comprises at least one of a linear function or a non-linear function which describes relationship between the input signal, the feedback signal, the calibration error and the output signal of each sensor of the plurality of sensors.

The plurality of calibration data items further comprises information associated with the accepted margin of calibration error associated with each sensor of the plurality of sensors 108A-N. In one example, the accepted margin of calibration error of each sensor is a user defined threshold value present in an engineer's handbook.

The sensor recalibration module 112 further causes the processing unit 202 to train an artificial intelligence model by use of a training dataset comprising the received plurality of calibration data items. In one example, the artificial intelligence model is trained to determine a calibration error of each sensor of the plurality of sensors 108A-N. In one example, the artificial intelligence model is trained to determine that one or more sensors of the plurality of sensors is in an uncalibrated state. The artificial intelligence model is trained using at least one of supervised learning or a non supervised learning method.

In one example, the training dataset comprises a past calibration date for each sensor of the plurality of sensors. The artificial intelligence model is configured to determine a future calibration date for each sensor of the plurality of sensors based on the past calibration date of the sensor and further based on determination that the sensor is in the uncalibrated state. The processing unit 202 further trains the artificial intelligence model based on the plurality of feedback signals present in the plurality of calibration data items. After training, the artificial intelligence model is further configured to generate a feedback signal to recalibrate an uncalibrated sensor of the plurality of sensors 108A-N. In one example, the artificial intelligence model is trained using at least one of a supervised learning technique or an unsupervised training technique.

In one example, the artificial intelligence model is a K-nearest neighbor (KNN) algorithm. For example, the KNN algorithm trains on the plurality of calibration data items to determine one or more abnormal values in the plurality of calibration data items. The KNN algorithm is further configured to determine a degree of abnormality of each of the one or more abnormal values determined from the plurality of calibration data items.

The KNN algorithm is further configured to determine whether each sensor of the plurality of sensors 108A-N is in a calibrated state or an uncalibrated state based on an analysis of a first reading taken by a sensor 108N and a second reading taken by the standard measurement device 124. The KNN algorithm is further configured to determine a calibration error for each sensor of the plurality of sensors 108A-N based on an analysis of the first reading and the second reading. The KNN algorithm is further trained to analyze the determined calibration error to generate a feedback signal to recalibrate a specific sensor of the plurality of sensors 108A-N, after determination of the calibration error of the specific sensor.

The sensor recalibration module 112 further causes the processing unit 202 to receive a first image of a sensor 108N of the plurality of sensors 108A-N. The first image of the sensor 108N is captured by an image capture device such as a camera. In one example, the image capture device is a camera installed in the augmented reality headset 126. In another example, the image capture device is a closed circuit television camera. In one example, the first image is captured from a first display associated with the sensor 108N. The display is at least one of an analogue display or a digitaldisplay.

The sensor recalibration module 112 further causes the processing unit 202 to analyze the first image based on an application of an image processing algorithm on the first image. In one example, the image processing algorithm is a optical character recognition algorithm such as an intelligent word recognition algorithm, an intelligent character algorithm, and an optical mark recognition algorithm. The image processing algorithm is configured to determine a first reading associated with the sensor 108N.

The sensor recalibration module 112 further causes the processing unit 202 to receive a second image of the standard measurement device 124. The second image of the standard measurement device 124 is an image of a second display which is associated with the standard measurement device 124. The second display is at least one of an analogue display or an analogue display.

The sensor recalibration module 112 further causes the processing unit 202 to analyze the second image based on an application of the image processing algorithm on the second image. The image processing algorithm is configured to determine a second reading associated with the standard measurement device 124. In one example, the first image and the second image are specific portions of a third image which encompasses the sensor 108N and the standard measurement device 124. In one example, the third image is captured by a closed circuit television camera installed in the technical installation.

In such a case, the processing unit 202 is configured to segment the first image and the second image from the third image by application of an image segmentation algorithm on the third image. Examples of the image segmentation algorithms comprise, but is not limited to Edge-Based Segmentation algorithm, a Threshold-Based Segmentation algorithm, a Region-Based Segmentation algorithm, a Cluster-Based Segmentation algorithm, and a Watershed Segmentation algorithm.

In the preferred embodiment, the method further comprises analysing, by the processing unit, the first reading and the second reading by application of the trained artificial intelligence model on the first reading and the second reading. The artificial intelligence model is configured to analyse the first reading and the second reading to determine whether the sensor 108N is in a calibrated state or an uncalibrated state.

The sensor recalibration module 112 further causes the processing unit 202 to determine a calibration error of the sensor 108N based on application of the trained artificial intelligence model on the first reading and the second reading. In one example, the calibration error indicates a difference between the first reading and the second reading. In another example, the calibration error is indicative of a degree of abnormality of the first reading.

The sensor recalibration module 112 further causes the processing unit 202 to determine whether the sensor 108N is in an uncalibrated state, based on the analysis of the first reading and the second reading by application of the artificial intelligence model. In one example, the KNN algorithm is configured to determine whether the sensor 108N is in the calibrated state or the uncalibrated state based on the analysis of the first reading and the second reading.

In one example, the artificial intelligence model is configured to compare the first reading and the second reading to determine the calibration error of the sensor 108N. The artificial intelligence algorithm is further configured to compare the calibration error with an accepted margin of calibration error of the sensor 108N. If the calibration error of the sensor 108N is greater than the accepted margin of calibration error of the sensor 108N, the artificial intelligence model is configured to determine the sensor 108N to be in the uncalibrated state.

The sensor recalibration module 112 further causes the processing unit 202 to output, in a case where the sensor 108N is determined to be in the uncalibrated state, a notification to a user that the sensor 108N is the uncalibrated state. The notification is at least one of an audio-based, a text based, a video based, and a haptic notification.

Referring to FIG. 1, a display screen 128 of the augmented reality headset 126 is shown. The display screen 128 depicts the sensor 108N and the standard measurement device 124. The display screen 128 further depicts a notification 130 which indicates that the sensor 108N is uncalibrated.

The sensor recalibration module 112 further causes the processing unit 202 to determine a calibration date for the sensor 108N based on the determination that the sensor 108N is in the uncalibrated state. In one example, the plurality of calibration data items comprises a calibration schedule associated with the plurality of calibration cycles of the plurality of sensors 108A-N. In such a case, the calibration date is determined based on a calibration schedule associated with the plurality of sensors 108A-N in the technical installation 106.

The sensor recalibration module 112 further causes the processing unit 202 to generate a calibration feedback signal based on an application of the artificial intelligence model on the first reading and the second reading, and further based on the plurality of calibration data items. The sensor recalibration module 112 further causes the processing unit 202 to transmit the generated feedback signal to the sensor 108N of the plurality of sensors 108A-N to recalibrate the sensor 108N.

In one example, the plurality of calibration data items comprises a plurality of instructions to recalibrate each sensor of the plurality of sensors 108A-N. In such a case, the sensor recalibration module causes the processing unit 202 to determine one or more instructions from the plurality of instructions such that the determined one or more instructions are associated with recalibrating the sensor 108N of the plurality of sensors 108A-N. In one example, the one or more instructions are determined by application of a natural language processing algorithm on the plurality of instructions in the plurality of calibration data items. The determine one or more instructions enable a user to recalibrate the sensor 108N. The sensor recalibration module 112 further causes the processing unit 202 to display the determined one or more instructions for the user via a display screen.

In one example, a plurality of processes run in the technical installation 106. The plurality of sensors 108A-N in the technical installation 106 are configured to measure a plurality of parameters associated with the plurality of processes. Thus each sensor of the plurality of sensors 108AN is associated with a specific process of the plurality of processes of the technical installation 106. In one example, the artificial intelligence algorithm is configured to determine the degree of abnormality associated with the first reading.

The sensor recalibration module 112 further causes the processing unit 202 to compare the degree of abnormality associated with the sensor 108N with at least one threshold. In a case where the degree of abnormality associated with the deviation is greater than the at least one threshold, then the processing unit 202 is configured to initiate a process interlock process for at least one process associated with the sensor 108N of the plurality of sensors 108A-N of the technical installation 106.

The process interlock process is configured to interlock the at least one process which is associated with the sensor 108N of the plurality of sensors 108A-N of the technical installation. Advantageously, a risk factor associated with running the at least one process with an uncalibrated sensor is eliminated.

The sensor recalibration module 112 further causes the processing unit 202 to receive a first location of the sensor 108N of the plurality of sensors 108A-N of the technical installation 106. In one example, the location of each sensor is received from a global positioning system module in each sensor 108N of the plurality of sensors 108A-N. The sensor recalibration module 112 further causes the processing unit 202 to receive a second location of a user in the technical installation 106. The sensor recalibration module 112 further causes the processing unit 202 to generate a navigation path from the second location of the user to the first location of the uncalibrated sensor 108N. The sensor recalibration module 112 further causes the processing unit 202 to the generated navigation path on a display device. In one example, the display device is an augmented reality based display device such as the augmented reality headset 126. The sensor recalibration module 112 further causes the processing unit 202 to display a marker on a visor of the augmented reality headset 126The marker indicates a location of the uncalibrated sensor 108N in the technical installation 106.

In one example, the technical installation 106 has a plurality of visual markers, such as QR code based markers, installed within one or more portions of the technical installation 106. The plurality of visual markers are indicative of specific locations within the technical installation 106. The augmented reality headset 126 is configured to capture an image of the one or more portions of the technical installation 106 via a camera in the augmented reality headset 126. The augmented reality headset 126 is further configured to detect at least one visual marker in the captured image by application of an image recognition algorithm on the image.

The sensor recalibration module 112 further causes the processing unit 202 to receive an image from the augmented reality headset 126. The sensor recalibration module 112 further causes the processing unit 202 to determine the sensor 108N in the image based on an application of an object detection algorithm on the received image. The sensor recalibration module 112 further causes the processing unit 202 to display a notification that the sensor 108N is in the uncalibrated state based on the determination of the sensor 108N in the image and the determination that the sensor 108N is in the uncalibrated state.

The sensor recalibration module 112 further causes the processing unit 202 to receive a calibration data item associated with the sensor from the plurality of calibration data items associated with the plurality of sensors 108A-N. The sensor recalibration module 112 further causes the processing unit 202 to validate the received calibration data item by application of the artificial intelligence algorithm on the received calibration data item.

The sensor recalibration module 112 further causes the processing unit 202 to determine a first deviation between at least one historical sensor reading of the plurality of historical sensor readings, and at least one historical standard measurement device reading from the plurality of calibration data items. The sensor recalibration module 112 further causes the processing unit 202 to determine a second deviation between the first reading of the sensor and the second reading of the standard measurement device. The sensor recalibration module 112 further causes the processing unit 202 to compare the first deviation to the second deviation to determine whether the first reading is greater than the second reading. The processing unit is configured to predict an optimal calibration date for the sensor based on an application of the artificial intelligence model on the first deviation and the second deviation.

The communication interface 208 is configured for establishing communication sessions between the plurality of human machine interfaces 120A-N, and the industrial control system 102. The communication interface 208 allows the one or more engineering applications running on the plurality of human machine interfaces 120A-N to import/export engineering programs into the processing unit 202. In an embodiment, the communication interface 208 interacts with the interface at the plurality of human machine interfaces 120A-N for allowing the engineers to access the engineering programs associated with an engineering project file and perform one or more actions on the engineering programs stored in the industrial control system 102.

The input-output unit 210 include input devices a keypad, touch-sensitive display, camera (such as a camera receiving gesture-based inputs), etc. capable of receiving one or more input signals, such as user commands to process engineering project file. Also, the input-output unit 210 is a display unit for displaying a graphical user interface which visualizes the behavior model associated with the modified engineering programs and also displays the status information associated with each set of actions performed on the graphical user interface. The set of actions may include execution of predefined tests, download, compile and deploy of graphical programs. The bus 214 acts as interconnect between the processing unit 202, the memory 204, and the input-output unit 210.

The network interface 212 may be configured to handle network connectivity, bandwidth and network traffic between the industrial control system 102, plurality of human machine interfaces 120A-N and the technical installation 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an industrial control system 102 as is unique to the present disclosure or necessary for an understanding of the present disclosure is depicted and described. The remainder of the construction and operation of the industrial control system 102 may conform to any of the various current implementation and practices known in the art.

FIG 3 is a block diagram of the sensor recalibration module 112, such as those shown in FIG 2, in which an embodiment of the present invention can be implemented. In FIG 3, the sensor recalibration module 112 comprises a request handler module 302, a calibration error detection module 304, an analysis module 306, a modifier module 308, an engineering object database 310, a validation module 312 and a deployment module 314. FIG. 3 is explained in conjunction with FIG. 1 and FIG. 2.

The request handler module 302 is configured for receiving the request to manage the technical installation 106. For example, the request is received from one of the one or more users external to the industrial environment 100 via a network. In alternative embodiment, the request is received from the one or the plurality of human machine interfaces 120A-N via the network. The request handler module 302 is further configured to receive one or more user requests from the augmented reality headset 126.

The calibration error detection module 304 is configured for determining calibration error in each sensor of the plurality of sensors 108A-N.

The analysis module 306 is configured for analyzing a plurality of readings captured by the plurality of sensors 108A-N from the technical installation 106.

The modifier module 308 is configured to generate a feedback signal to recalibrate one or more sensors of the plurality of sensors 108A-N of the technical installation 106. The modifier module 308 is configured to generate the feedback signal by application of the artificial intelligence model on a plurality of readings of the plurality of sensors 108A-N in the technical installation 106.

The engineering object database 310 is configured for generating an engineering object library comprising information about the plurality of sensors 108A-N. In one example, the engineering object library is a SQL or a non-SQL database.

The validation module 312 is configured to validate a specific calibration cycle associated with the plurality of sensors 108A-N by application of the artificial intelligence model on the plurality of reading captured by the plurality of sensors (108A-N).

The deployment module 314 is configured for applying the generated feedback signal to a calibration port of the sensors 108N. In one example, by applying the generated feedback signal onto the calibration port of the sensor 108N, the sensor 108N is recalibrated.

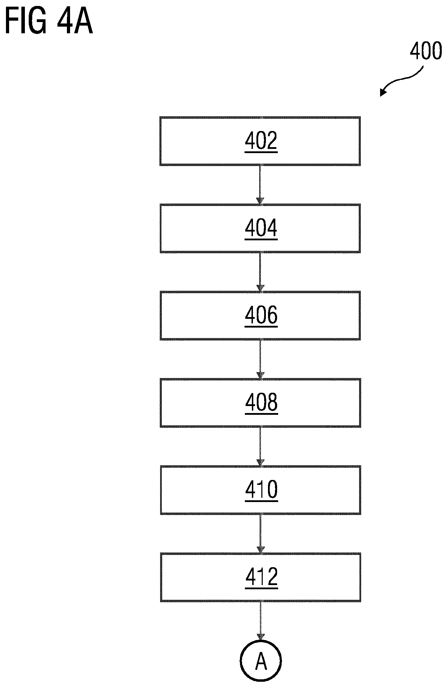

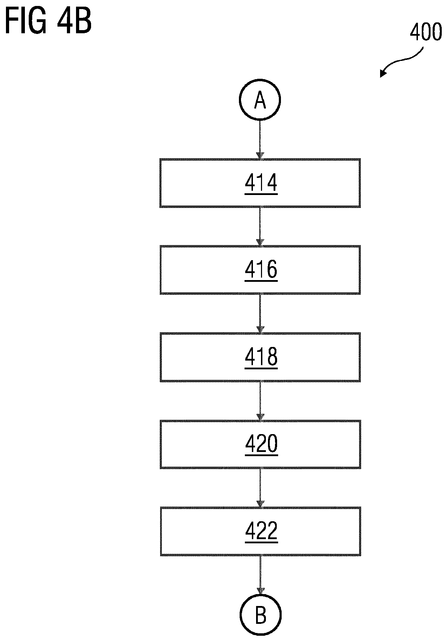

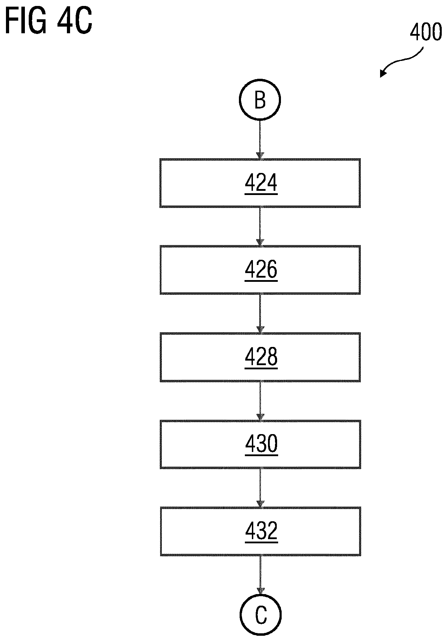

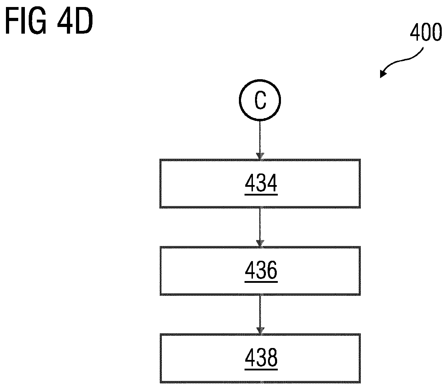

FIGS 4A-D show a process flowchart illustrating an exemplary method 400 of recalibrating a plurality of sensors in a technical installation according to an embodiment of the present invention. FIG. 4A-E is explained in conjunction with FIGs 1 to 3.

At 402, a plurality of calibration data items associated with each sensor of the plurality of sensors 108A-N are received by the processing unit 202.

At 404, an artificial intelligence model is trained by the processing unit 202 by use of a training dataset comprising the received plurality of calibration data items. In one example, the artificial intelligence model is configured to determine a calibration error of each sensor of the plurality of sensors 108A-N. In one example, the artificial intelligence model is trained to determine that one or more sensors of the plurality of sensors 108A-N is in an uncalibrated state. The artificial intelligence model is trained using at least one of supervised learning or a non-supervised learning method.

In one example, the training dataset comprises a past calibration date for each sensor of the plurality of sensors 108A-N. The artificial intelligence model is configured to determine a future calibration date for each sensor of the plurality of sensors 108A-N based on the past calibration date of the sensor and further based on determination that the sensor is in the uncalibrated state. The processing unit 202 further trains the artificial intelligence model based on the plurality of feedback signals present in the plurality of calibration data items. After training, the artificial intelligence model is further configured to generate a feedback signal to recalibrate an uncalibrated sensor of the plurality of sensors 108A-N. In one example, the artificial intelligence model is trained using at least one of a supervised learning technique or an unsupervised training technique.

In one example, the artificial intelligence model is a K-nearest neighbor (KNN) algorithm. For example, the KNN algorithm trains on the plurality of calibration data items to determine one or more abnormal values in the plurality of calibration data items. The KNN algorithm is further configured to determine a degree of abnormality of each of the one or more abnormal values determined from the plurality of calibration data items.

The KNN algorithm is further configured to determine whether each sensor of the plurality of sensors 108A-N is in a calibrated state or an uncalibrated state based on an analysis of a first reading taken by a sensor 108N and a second reading taken by the standard measurement device 124. The KNN algorithm is further configured to determine a calibration error for each sensor of the plurality of sensors 108A-N based on an analysis of the first reading and the second reading. The KNN algorithm is further trained to analyze the determined calibration error to generate a feedback signal to recalibrate a specific sensor of the plurality of sensors 108A-N, after determination of the calibration error of the specific sensor.

At 406, a first image of a sensor 108N of the plurality of sensors 108A-N is received by the processing unit 202, from the image capture device. The first image of the sensor 108N is captured by an image capture device such as a camera. In one example, the image capture device is a camera installed in the augmented reality headset 126. In another example, the image capture device is a closed circuit television camera. In one example, the first image is captured from a first display associated with the sensor 108N. The display is at least one of an analogue display or an analogue display.

At 408, the first image is analyzed by the processing unit 202 based on an application of an image processing algorithm on the first image. In one example, the image processing algorithm is a optical character recognition algorithm such as an intelligent word recognition algorithm, an intelligent character algorithm, and an optical mark recognition algorithm. The image processing algorithm is configured to determine a first reading associated with the sensor 108N.

At 410, a second image of the standard measurement device 126 is received by the processing unit 202 from the image captrue device. The second image of the standard measurement device 126 is an image of a second display which is associated with the standard measurement device 126. The second display is at least one of an analogue display or an analogue display.

At 412, the second image is analzed by the processing unit 202 based on an application of the image processing algorithm on the second image.

At step 414, the image processing algorithm is configured to determine a second reading associated with the standard measurement device 126. In one example, the first image and the second image are specific portions of a third image which encompasses the sensor 108N and the standard measurement device 126. In one example, the third image is captured by a closed circuit television camera installed in the technical installation 106. The processing unit 202 is configured to received the third image from the closed circuit television camera.

At 416, the first image and the second image are segmented from the third image by application of an image segmentation algorithm on the third image. Examples of the image segmentation algorithms comprise, but is not limited to Edge-Based Segmentation algorithm, a Threshold-Based Segmentation algorithm, a Region-Based Segmentation algorithm, a Cluster-Based Segmentation algorithm, and a Watershed Segmentation algorithm.

At 418, the first reading and the second reading are analyzed by application of the trained artificial intelligence model on the first reading and the second reading. The artificial intelligence model is configured to analyse the first reading and the second reading to determine whether the sensor 108N is in a calibrated state or an uncalibrated state.

At 420, a calibration error of the sensor 108N is determined by the processing unit 202 based on the application of the trained artificial intelligence model on the first reading and the second reading. In one example, the calibration error indicates a difference between the first reading and the second reading. In another example, the calibration error is indicative of a degree of abnormality of the first reading.

At 422, the processing unit 202 is configured to determine whether the sensor 108N is in an uncalibrated state, based on the analysis of the first reading and the second reading by application of the artificial intelligence model. In one example, the KNN algorithm is configured to determine whether the sensor 108N is in the calibrated state or the uncalibrated state based on the analysis of the first reading and the second reading.

In one example, the artificial intelligence model is configured to compare the first reading and the second reading to determine the calibration error of the sensor 108N. The artificial intelligence algorithm is further configured to compare the calibration error with an accepted margin of calibration error of the sensor 108N. If the calibration error of the sensor 108N is greater than the accepted margin of calibration error of the sensor 108N, the artificial intelligence model is configured to determine the sensor 108N to be in the uncalibrated state.

At 424. in a case where the sensor 108N is determined to be in the uncalibrated state, a notification is output by the processing unit 202 to a user. The notification comprises a message that the sensor 108N is the uncalibrated state. The notification is at least one of an audio-based, a text based, a video based, and a haptic notification.

At 426, a calibration date is determined by the processing unit 202 for the sensor 108N based on the determination that the sensor 108N is in the uncalibrated state. In one example, the plurality of calibration data items comprises a calibration schedule associated with the plurality of calibration cycles of the plurality of sensors 108A-N. In such a case, the calibration date is determined based on a calibration schedule associated with the plurality of sensors 108A-N in the technical installation 106.

At 428, a calibration feedback signal is generated by the processing unit 202 based on an application of the artificial intelligence model on the first reading and the second reading, and further based on the plurality of calibration data items. The sensor recalibration module 112 further causes the processing unit 202 to transmit the generated feedback signal to the sensor 108N of the plurality of sensors 108A-N to recalibrate the sensor 108N.

In one example, the plurality of calibration data items comprises a plurality of instructions to recalibrate each sensor of the plurality of sensors 108A-N. In such a case, the sensor recalibration module causes the processing unit 202 to determine one or more instructions from the plurality of instructions such that the determined one or more instructions are associated with recalibrating the sensor 108N of the plurality of sensors 108A-N. In one example, the one or more instructions are determined by application of a natural language processing algorithm on the plurality of instructions in the plurality of calibration data items. For example, the processing unit 202 is configured to apply the natural language processing algorithm to determine whether a name of the sensor 108N is present in the one or more instructions. In a case where the name of the sensor 108N is present in the one or more instructions, then the one or more instructions are determined to be associated with the sensor 108N. The determined one or more instructions enable a user to recalibrate the sensor 108N. The sensor recalibration module 112 further causes the processing unit 202 to display the determined one or more instructions for the user via a display screen, for example, a visor of the augmented reality headset 126.

In one example, a plurality of processes run in the technical installation 106. The plurality of sensors 108A-N in the technical installation 106 are configured to measure a plurality of parameters associated with the plurality of processes. Thus each sensor of the plurality of sensors 108AN is associated with a specific process of the plurality of processes of the technical installation 106. In one example, the artificial intelligence algorithm is configured to determine the degree of abnormality associated with the first reading.

At 430, the degree of abnormality associated with the sensor 108N is compared by the processing unit 202 with at least one threshold.

In a case where the degree of abnormality associated with the deviation is greater than the at least one threshold, at 432, the processing unit 202 initiates a process interlock process for at least one process associated with the sensor 108N of the plurality of sensors 108A-N of the technical installation 106.

The process interlock process is configured to interlock the at least one process which is associated with the sensor 108N of the plurality of sensors 108A-N of the technical installation. Advantageously, a risk factor associated with running the at least one process with an uncalibrated sensor is eliminated.

At 434, a first location of the sensor 108N of the plurality of sensors 108A-N of the technical installation 106 is received by the processing unit 202. In one example, the location of each sensor is received from a global positioning system module in each sensor 108N of the plurality of sensors 108A-N.

At step 436, a second location of a user in the technical installation 106 is received by the processing unit 202. The sensor recalibration module 112 further causes the processing unit 202 to generate a navigation path from the second location of the user to the first location of the uncalibrated sensor 108N.

At 438, the generated navigation path is displayed by the processing unit 202 on a display device. In one example, the display device is an augmented reality based display device such as the augmented reality headset 126. The sensor recalibration module 112 further causes the processing unit 202 to a marker on a visor of the augmented reality headset 126, wherein the marker indicates a location of the uncalibrated sensor 108N in the technical installation 106.

In one example, the technical installation 106 has a plurality of visual markers, such as QR code based markers, installed within one or more portions of the technical installation 106. The plurality of visual markers are indicative of specific locations within the technical installation 106. The augmented reality headset 126 is configured to capture an image of the one or more portions of the technical installation 106 via a camera in the augmented reality headset 126. The augmented reality headset 126 is further configured to detect at least one visual marker in the captured image by application of an image recognition algorithm on the image.

The sensor recalibration module 112 further causes the processing unit 202 to receive an image from an augmented reality headset 126. The sensor recalibration module 112 further causes the processing unit 202 to determine the sensor 108N in the image based on an application of an object detection algorithm on the received image. The sensor recalibration module 112 further causes the processing unit 202 to display a notification that the sensor 108N is in the uncalibrated state based on the determination that the sensor 108N is in the uncalibrated state.

The sensor recalibration module 112 further causes the processing unit 202 to receiving a calibration data item associated with the sensor from the plurality of calibration data items associated with the plurality of sensors 108A-N. The sensor recalibration module 112 further causes the processing unit 202 to validate the received calibration data item by application of the artificial intelligence algorithm on the received calibration data item.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

### List of reference numbers:

1. an industrial environment 100
2. an engineering system 102
3. one or more client devices 120A-N
4. a network 104
5. A plurality of sensors 108A-N
6. A technical installation 106
7. a platform 110
8. sensor recalibration module 112
9. a server 114
10. a network interface 116
11. a database 118
12. a standard measurement device 124
13. augmented reality headset 126
14. a processor(s) 202
15. an accessible memory 204
16. a storage unit 206
17. a communication interface 208
18. an input-output unit 210
19. a network interface 212
20. a bus 214
21. an integrated development environment (IDE) 216
22. a request handler module 302,
23. a calibration error detection module 304,
24. an analysis module 306,
25. a modifier module 308
26. an engineering object database 310
27. a validation module 312
28. a deployment module 314.

## Claims

1. A method of recalibrating a plurality of sensors (108A-N) in a technical installation (106), the method comprising:
receiving, by a processing unit (202), a first image of a sensor (108N) of a plurality of sensors (108A-N) in a technical installation (106) and a second image of a standard measurement device (124) attached to the sensor (108N);
determining, by the processing unit (202), a first reading associated with the sensor (108N) and a second reading associated with the standard measurement device (124) based on an analysis of the first image and the second image;
determining, by the processing unit (202), that the sensor (108N) is in an uncalibrated state by application of an artificial intelligence model on the first reading and the second reading, wherein the artificial intelligence model is configured to determine the uncalibrated state in the sensor; and
outputting, by the processing unit (202), a notification to a user based on a determination that the sensor is in the uncalibrated state.

2. The method according to claim 1, wherein determining whether the sensor is in the uncalibrated state comprises:
receiving, by the processing unit (202), a plurality of calibration data items associated with each sensor of the plurality of sensors (108A-N) in the technical installation (106), wherein
the plurality of calibration data items comprises information associated with each calibration cycle of a plurality of calibration cycles of the plurality of sensors (108A-N), and
the information associated with each calibration cycle of the plurality of calibration cycles comprises a plurality of historical sensor readings, a plurality of historical standard measurement device readings, and a plurality of recorded calibration error of each sensor of the plurality of sensors (108A-N) during each calibration cycle of the plurality of calibration cycles;
training, by the processing unit (202), the artificial intelligence model to determine a calibration error of each sensor of the plurality of sensors (108A-N) in the technical installation (106) based on the received plurality of calibration data items; and
determining, by the processing unit (202), that the sensor (108N) is in the uncalibrated state by the application of the trained artificial intelligence model on the first reading and the second reading.

3. The method according to claim 2, wherein the plurality of calibration data items further comprises information associated with an accepted margin of calibration error for each sensor of the plurality of sensors (108A-N), and wherein the plurality of calibration data items further comprises a plurality of feedback signals which used to calibrate each sensor of the plurality of sensors (108A-N) during each calibration cycle of the plurality of calibration cycles.

4. The method according to claim 3, wherein the method further comprises:
determining, by the processing unit (202), a first deviation between a historical sensor reading of the sensor and a historical standard measurement device reading from the plurality of calibration data items;
determining, by the processing unit (202), a second deviation between the first reading of the sensor (108N) and the second reading of the standard measurement device (124);
determining, by the processing unit (202), whether the first deviation is greater than the second deviation; and
predicting, by the processing unit (202), an optimal calibration date for the sensor (108N) based on an application of the trained artificial intelligence model on the first deviation and the second deviation, wherein the optimal calibration date is a future calibration date for each sensor of the plurality of sensors determined by the trained artificial intelligence model based on a past calibration date of the sensor and a determination that the sensor is in the uncalibrated state.

5. The method according to any of claims 1 to 4, wherein the method further comprises:
determining, by the processing unit (202), a rate of degradation of a number of readings of the sensor (108N) based on an analysis of the plurality of calibration data items;
determining, by the processing unit (202), whether the determine rate of degradation is greater than a threshold; and
notifying, by the processing unit (202), a user to perform predictive maintenance on the sensor (108N) based on the determination that the rate of degradation is greater than the threshold.

6. The method according to any of claims 1 to 4, wherein the method further comprises:
training, by the processing unit (202), the artificial intelligence model to generate a feedback signal to recalibrate the sensor (108N) based on an analysis of the plurality of feedback signals in the plurality of calibration data items;
generating, by the processing unit (202), the feedback signal to recalibrate the sensor (108N) based on the determination that the sensor (108N) is in the uncalibrated state; and
transmitting, by the processing unit (202), the generated feedback signal to the sensor (108N) to recalibrate the sensor (108N).

7. The method according to any of claims 1 to 6, wherein determining, by the processing unit (202), the first reading associated with the sensor (108N) of the plurality of sensors (108A-N) and the second reading associated with the standard measurement device (124) comprises:
receiving, by the processing unit (202), the first image of the sensor (108N) of the plurality of sensors (108A-N), and the second image of the standard measurement device (124) from an image capture device;
applying, by the processing unit (202), an image processing algorithm on the first image and the second image; and
determining, by the processing unit (202), the first reading and the second reading based on the application of an image processing algorithm on the first image and the second image.

8. The method according to any of claims 1 to 7, further comprising:
determining, by the processing unit (202), a degree of abnormality of the first reading of the sensor by application of the artificial intelligence model on the first reading and the second reading;
determining, by the processing unit (202), whether the degree of abnormality of the first reading is greater than a threshold; and
initiating, by the processing unit (202), a process interlock process on an industrial process associated with the sensor based on the determination that the first reading is greater than the threshold.

9. The method according to any of claims 1 to 7, further comprising:
receiving, by the processing unit (202), a first location of the sensor in the technical installation (106);
receiving, by the processing unit (202), a second location of the user in the technical installation (106);
mapping, by the processing unit (202), the first location and the second location on a map of the technical installation (106) ;
generating, by the processing unit (202), a navigational path between the first location and the second location; and
displaying, by the processing unit (202), the generated navigational path and the map of the technical installation (106), via a display device.

10. The method according to any of claims 1 to 8, further comprising:
receiving, by the processing unit (202), an image from an augmented reality headset (126);
determining, by the processing unit (202), the sensor (108N) in the image based on an application of an object detection algorithm on the received image; and
displaying, by the processing unit (202), a notification that the sensor (108N) is in the uncalibrated state based on the determination that the sensor is in the uncalibrated state.

11. The method according to claim 2, further comprising:
validating, by the processing unit (202), one of the received calibration data items by application of the artificial intelligence algorithm on said received calibration data item.

12. An industrial control system (102) for recalibrating a plurality of sensors in a technical installation, wherein the industrial control system (102) comprises:
a processing unit (202); and
a memory (204) coupled to the processing unit (202), wherein the memory comprises a sensor recalibration module (112) stored in the form of machine-readable instructions executable by the one or more processor(s), wherein the sensor recalibration module (112) is capable of performing a method according to any of the claims 1-11.

13. An industrial environment (100) comprising:
an industrial control system (102) as claimed in claim 12;
a technical installation (106) comprising one or more physical components; and
a plurality of human machine interfaces (120A-N) communicatively coupled to the industrial control system (102) via a network (104).

14. A computer-program product, having machine-readable instructions stored therein, that when executed by a processing unit (202), cause the processors to perform a method according to any of the claims 1-11.

## Patentansprüche

1. Verfahren zum Rekalibrieren einer Mehrzahl von Sensoren (108A-N) in einer technischen Anlage (106), wobei das Verfahren Folgendes umfasst:
Empfangen, durch eine Verarbeitungseinheit (202), eines ersten Bildes eines Sensors (108N) einer Mehrzahl von Sensoren (108AN) in einer technischen Anlage (106) und eines zweiten Bildes einer Standardmessvorrichtung (124), die an dem Sensor (108N) angebracht ist;
Bestimmen, durch die Verarbeitungseinheit (202), eines ersten Messwerts, der mit dem Sensor (108N) assoziiert ist, und eines zweiten Messwerts, der mit der Standardmessvorrichtung (124) assoziiert ist, basierend auf einer Analyse des ersten Bildes und des zweiten Bildes;
Bestimmen, durch die Verarbeitungseinheit (202), dass sich der Sensor (108N) in einem nicht kalibrierten Zustand befindet, durch Anwenden eines Künstliche-Intelligenz-Modells auf den ersten Messwert und den zweiten Messwert, wobei das Künstliche-Intelligenz-Modell dazu ausgelegt ist, den nicht kalibrierten Zustand bei dem Sensor zu bestimmen; und
Ausgeben, durch die Verarbeitungseinheit (202), einer Benachrichtigung an einen Benutzer basierend auf einer Bestimmung, dass sich der Sensor in dem nicht kalibrierten Zustand befindet.

2. Verfahren nach Anspruch 1, wobei das Bestimmen, ob sich der Sensor in dem nicht kalibrierten Zustand befindet, Folgendes umfasst:
Empfangen, durch die Verarbeitungseinheit (202), einer Mehrzahl von Kalibrierungsdatenelementen, die mit jedem Sensor der Mehrzahl von Sensoren (108A-N) in der technischen Anlage (106) assoziiert sind, wobei
die Mehrzahl von Kalibrierungsdatenelementen Informationen umfassen, die mit jedem Kalibrierungszyklus einer Mehrzahl von Kalibrierungszyklen der Mehrzahl von Sensoren (108A-N) assoziiert sind, und
die mit jedem Kalibrierungszyklus der Mehrzahl von Kalibrierungszyklen assoziierten Informationen eine Mehrzahl von historischen Sensormesswerten, eine Mehrzahl von historischen Standardmessvorrichtungsmesswerten und eine Mehrzahl von aufgezeichneten Kalibrierungsfehlern jedes Sensors der Mehrzahl von Sensoren (108A-N) während jedes Kalibrierungszyklus der Mehrzahl von Kalibrierungszyklen umfassen;
Trainieren, durch die Verarbeitungseinheit (202), des Künstliche-Intelligenz-Modells zum Bestimmen eines Kalibrierungsfehlers jedes Sensors der Mehrzahl von Sensoren (108A-N) in der technischen Anlage (106) basierend auf der empfangenen Mehrzahl von Kalibrierungsdatenelementen; und
Bestimmen, durch die Verarbeitungseinheit (202), dass sich der Sensor (108N) in dem nicht kalibrierten Zustand befindet, durch die Anwendung des trainierten Künstliche-Intelligenz-Modells auf den ersten Messwert und den zweiten Messwert.

3. Verfahren nach Anspruch 2, wobei die Mehrzahl von Kalibrierungsdatenelementen ferner Informationen umfassen, die mit einer akzeptierten Kalibrierungsfehlerspanne für jeden Sensor der Mehrzahl von Sensoren (108A-N) assoziiert sind, und wobei die Mehrzahl von Kalibrierungsdatenelementen ferner eine Mehrzahl von Rückkopplungssignalen umfassen, die zum Kalibrieren jedes Sensors der Mehrzahl von Sensoren (108A-N) während jedes Kalibrierungszyklus der Mehrzahl von Kalibrierungszyklen verwendet werden.

4. Verfahren nach Anspruch 3, wobei das Verfahren ferner Folgendes umfasst:
Bestimmen, durch die Verarbeitungseinheit (202), einer ersten Abweichung zwischen einem historischen Sensormesswert des Sensors und einem historischen Standardmessvorrichtungsmesswert aus der Mehrzahl von Kalibrierungsdatenelementen;
Bestimmen, durch die Verarbeitungseinheit (202), einer zweiten Abweichung zwischen dem ersten Messwert des Sensors (108N) und dem zweiten Messwert der Standardmessvorrichtung (124);
Bestimmen, durch die Verarbeitungseinheit (202), ob die erste Abweichung größer als die zweite Abweichung ist; und
Vorhersagen, durch die Verarbeitungseinheit (202), eines optimalen Kalibrierungsdatums für den Sensor (108N) basierend auf einer Anwendung des trainierten Künstliche-Intelligenz-Modells auf die erste Abweichung und die zweite Abweichung, wobei das optimale Kalibrierungsdatum ein zukünftiges Kalibrierungsdatum für jeden Sensor der Mehrzahl von Sensoren ist, das durch das trainierte Künstliche-Intelligenz-Modell basierend auf einem vergangenen Kalibrierungsdatum des Sensors und einer Bestimmung, dass sich der Sensor in dem nicht kalibrierten Zustand befindet, bestimmt wird.

5. Verfahren nach einem der Ansprüche 1 bis 4, wobei das Verfahren ferner Folgendes umfasst:
Bestimmen, durch die Verarbeitungseinheit (202), einer Verschlechterungsrate einer Anzahl von Messwerten des Sensors (108N) basierend auf einer Analyse der Mehrzahl von Kalibrierungsdatenelementen;
Bestimmen, durch die Verarbeitungseinheit (202), ob die bestimmte Verschlechterungsrate größer als ein Schwellenwert ist; und
Benachrichtigen, durch die Verarbeitungseinheit (202), eines Benutzers zum Durchführen einer prädiktiven Wartung an dem Sensor (108N) basierend auf der Bestimmung, dass die Verschlechterungsrate größer als der Schwellenwert ist.

6. Verfahren nach einem der Ansprüche 1 bis 4, wobei das Verfahren ferner Folgendes umfasst:
Trainieren, durch die Verarbeitungseinheit (202), des Künstliche-Intelligenz-Modells zum Erzeugen eines Rückkopplungssignals zum Rekalibrieren des Sensors (108N) basierend auf einer Analyse der Mehrzahl von Rückkopplungssignalen in der Mehrzahl von Kalibrierungsdatenelementen;
Erzeugen, durch die Verarbeitungseinheit (202), des Rückkopplungssignals zum Rekalibrieren des Sensors (108N) basierend auf der Bestimmung, dass sich der Sensor (108N) in dem nicht kalibrierten Zustand befindet; und
Übertragen, durch die Verarbeitungseinheit (202), des erzeugten Rückkopplungssignals an den Sensor (108N) zum Rekalibrieren des Sensors (108N).

7. Verfahren nach einem der Ansprüche 1 bis 6, wobei das Bestimmen, durch die Verarbeitungseinheit (202), des ersten Messwerts, der mit dem Sensor (108N) der Mehrzahl von Sensoren (108A-N) assoziiert ist, und des zweiten Messwerts, der mit der Standardmessvorrichtung (124) assoziiert ist, Folgendes umfasst:
Empfangen, durch die Verarbeitungseinheit (202), des ersten Bildes des Sensors (108N) der Mehrzahl von Sensoren (108A-N) und des zweiten Bildes der Standardmessvorrichtung (124) von einer Bilderfassungsvorrichtung;
Anwenden, durch die Verarbeitungseinheit (202), eines Bildverarbeitungsalgorithmus auf das erste Bild und das zweite Bild; und
Bestimmen, durch die Verarbeitungseinheit (202), des ersten Messwerts und des zweiten Messwerts basierend auf der Anwendung eines Bildverarbeitungsalgorithmus auf das erste Bild und das zweite Bild.

8. Verfahren nach einem der Ansprüche 1 bis 7, das ferner Folgendes umfasst:
Bestimmen, durch die Verarbeitungseinheit (202), eines Grads einer Anomalie des ersten Messwerts des Sensors durch Anwenden des Künstliche-Intelligenz-Modells auf den ersten Messwert und den zweiten Messwert;
Bestimmen, durch die Verarbeitungseinheit (202), ob der Grad der Anomalie des ersten Messwerts größer als ein Schwellenwert ist; und
Initiieren, durch die Verarbeitungseinheit (202), eines Prozessverriegelungsprozesses an einem industriellen Prozess, der mit dem Sensor assoziiert ist, basierend auf der Bestimmung, dass der erste Messwert größer als der Schwellenwert ist.

9. Verfahren nach einem der Ansprüche 1 bis 7, das ferner Folgendes umfasst:
Empfangen, durch die Verarbeitungseinheit (202), eines ersten Standorts des Sensors in der technischen Anlage (106);
Empfangen, durch die Verarbeitungseinheit (202), eines zweiten Standorts des Benutzers in der technischen Anlage (106);
Abbilden, durch die Verarbeitungseinheit (202), des ersten Standorts und des zweiten Standorts auf einer Karte der technischen Anlage (106);
Erzeugen, durch die Verarbeitungseinheit (202), eines Navigationspfades zwischen dem ersten Standort und dem zweiten Standort; und
Anzeigen, durch die Verarbeitungseinheit (202), des erzeugten Navigationspfades und der Karte der technischen Anlage (106) über eine Anzeigevorrichtung.

10. Verfahren nach einem der Ansprüche 1 bis 8, das ferner Folgendes umfasst:
Empfangen, durch die Verarbeitungseinheit (202), eines Bildes von einer Erweiterte-Realität-Sprechgarnitur (126);
Bestimmen, durch die Verarbeitungseinheit (202), des Sensors (108N) in dem Bild basierend auf einer Anwendung eines Objektdetektionsalgorithmus auf das empfangene Bild; und
Anzeigen, durch die Verarbeitungseinheit (202), einer Benachrichtigung, dass sich der Sensor (108N) in dem nicht kalibrierten Zustand befindet, basierend auf der Bestimmung, dass sich der Sensor in dem nicht kalibrierten Zustand befindet.

11. Verfahren nach Anspruch 2, das ferner Folgendes umfasst:
Validieren, durch die Verarbeitungseinheit (202), eines der empfangenen Kalibrierungsdatenelemente durch Anwendung des Künstliche-Intelligenz-Algorithmus auf das empfangene Kalibrierungsdatenelement.

12. Industrielles Steuersystem (102) zum Rekalibrieren einer Mehrzahl von Sensoren in einer technischen Anlage, wobei das industrielle Steuersystem (102) Folgendes umfasst:
eine Verarbeitungseinheit (202); und
einen Speicher (204), der mit der Verarbeitungseinheit (202) gekoppelt ist, wobei der Speicher ein Sensorrekalibrierungsmodul (112) umfasst, das in Form von maschinenlesbaren Anweisungen gespeichert ist, die durch den einen oder die mehreren Prozessor(en) ausführbar sind, wobei das Sensorrekalibrierungsmodul (112) in der Lage ist, ein Verfahren nach einem der Ansprüche 1-11 durchzuführen.

13. Industrielle Umgebung (100), die Folgendes umfasst:
ein industrielles Steuersystem (102) nach Anspruch 12;
eine technische Anlage (106), die eine oder mehrere physische Komponenten umfasst; und
eine Mehrzahl von Mensch-Maschine-Schnittstellen (120A-N), die über ein Netzwerk (104) kommunikativ mit dem industriellen Steuersystem (102) gekoppelt sind.

14. Computerprogrammprodukt, in dem maschinenlesbare Anweisungen gespeichert sind, die, wenn sie durch eine Verarbeitungseinheit (202) ausgeführt werden, die Prozessoren veranlassen, ein Verfahren nach einem der Ansprüche 1-11 durchzuführen.

## Revendications

1. Procédé de réétalonnage d'une pluralité de capteurs (108AN) dans une installation technique (106), le procédé comprenant :
la réception, par une unité de traitement (202), d'une première image d'un capteur (108N) d'une pluralité de capteurs (108A-N) dans une installation technique (106) et d'une deuxième image d'un dispositif de mesure étalon (124) fixé au capteur (108N) ;
la détermination, par l'unité de traitement (202), d'un premier relevé associé au capteur (108N) et d'un deuxième relevé associé au dispositif de mesure étalon (124) sur la base d'une analyse de la première image et de la deuxième image ;
la détermination, par l'unité de traitement (202), que le capteur (108N) est dans un état non étalonné par application d'un modèle d'intelligence artificielle sur le premier relevé et sur le deuxième relevé, le modèle d'intelligence artificielle étant configuré pour déterminer l'état non étalonné dans le capteur ; et
la fourniture en sortie, par l'unité de traitement (202), d'une notification à l'intention d'un utilisateur sur la base d'une détermination que le capteur est dans l'état non étalonné.

2. Procédé selon la revendication 1, dans lequel la détermination si le capteur est dans l'état non étalonné comprend :
la réception, par l'unité de traitement (202), d'une pluralité d'éléments de données d'étalonnage associés à chaque capteur de la pluralité de capteurs (108A-N) dans l'installation technique (106),
la pluralité d'éléments de données d'étalonnage comprenant des informations associées à chaque cycle d'étalonnage d'une pluralité de cycles d'étalonnage de la pluralité de capteurs (108A-N), et
les informations associées à chaque cycle d'étalonnage de la pluralité de cycles d'étalonnage comprenant une pluralité de relevés historiques de capteurs, une pluralité de relevés historiques du dispositif de mesure étalon, et une pluralité d'erreurs d'étalonnage enregistrées de chaque capteur de la pluralité de capteurs (108A-N) pendant chaque cycle d'étalonnage de la pluralité de cycles d'étalonnage ;
l'entraînement, par l'unité de traitement (202), du modèle d'intelligence artificielle à déterminer une erreur d'étalonnage de chaque capteur de la pluralité de capteurs (108A-N) dans l'installation technique (106) sur la base de la pluralité d'éléments de données d'étalonnage reçue ; et
la détermination, par l'unité de traitement (202), que le capteur (108N) est dans l'état non étalonné par l'application du modèle d'intelligence artificielle entrainé sur le premier relevé et le deuxième relevé.

3. Procédé selon la revendication 2, dans lequel la pluralité d'éléments de données d'étalonnage comprend en outre des informations associées à une marge acceptée d'erreur d'étalonnage pour chaque capteur de la pluralité de capteurs (108A-N), et dans lequel la pluralité d'éléments de données d'étalonnage comprend en outre une pluralité de signaux de rétroaction qui sont utilisés pour étalonner chaque capteur de la pluralité de capteurs (108A-N) pendant chaque cycle d'étalonnage de la pluralité de cycles d'étalonnage.

4. Procédé selon la revendication 3, le procédé comprenant en outre :
la détermination, par l'unité de traitement (202), d'un premier écart entre un relevé de capteur historique du capteur et un relevé historique du dispositif de mesure étalon à partir de la pluralité d'éléments de données d'étalonnage ;
la détermination, par l'unité de traitement (202), d'un deuxième écart entre le premier relevé du capteur (108N) et le deuxième relevé du dispositif de mesure étalon (124) ;
la détermination, par l'unité de traitement (202), si le premier écart est supérieur au deuxième écart ; et
la prédiction, par l'unité de traitement (202), d'une date d'étalonnage optimale pour le capteur (108N) sur la base d'une application du modèle d'intelligence artificielle entraîné sur le premier écart et le deuxième écart, la date d'étalonnage optimale étant une date d'étalonnage future pour chaque capteur de la pluralité de capteurs déterminée par le modèle d'intelligence artificielle entraîné sur la base d'une date d'étalonnage antérieure du capteur et d'une détermination que le capteur est dans l'état non étalonné.

5. Procédé selon l'une quelconque des revendications 1 à 4, le procédé comprenant en outre :
la détermination, par l'unité de traitement (202), d'un taux de dégradation d'un nombre de relevés du capteur (108N) sur la base d'une analyse de la pluralité d'éléments de données d'étalonnage ;
la détermination, par l'unité de traitement (202), si le taux de dégradation déterminé est supérieur à un seuil ; et
la notification, par l'unité de traitement (202), à un utilisateur de réaliser une maintenance prédictive sur le capteur (108N) sur la base de la détermination que le taux de dégradation est supérieur au seuil.

6. Procédé selon l'une quelconque des revendications 1 à 4, le procédé comprenant en outre :
l'entraînement, par l'unité de traitement (202), du modèle d'intelligence artificielle à générer un signal de rétroaction afin de réétalonner le capteur (108N) sur la base d'une analyse de la pluralité de signaux de rétroaction dans la pluralité d'éléments de données d'étalonnage ;
la génération, par l'unité de traitement (202), du signal de rétroaction pour réétalonner le capteur (108N) sur la base de la détermination que le capteur (108N) est dans l'état non étalonné ; et
la transmission, par l'unité de traitement (202), du signal de rétroaction généré au capteur (108N) pour réétalonner le capteur (108N).

7. Procédé selon l'une quelconque des revendications 1 à 6, dans lequel la détermination, par l'unité de traitement (202), du premier relevé associé au capteur (108N) de la pluralité de capteurs (108A-N) et du deuxième relevé associé au dispositif de mesure étalon (124) comprend :
la réception, par l'unité de traitement (202), de la première image du capteur (108N) de la pluralité de capteurs (108A-N), et de la deuxième image du dispositif de mesure étalon (124) depuis un dispositif de capture d'image ;
l'application, par l'unité de traitement (202), d'un algorithme de traitement d'image sur la première image et la deuxième image ; et
la détermination, par l'unité de traitement (202), du premier relevé et du deuxième relevé sur la base de l'application d'un algorithme de traitement d'image sur la première image et la deuxième image.

8. Procédé selon l'une quelconque des revendications 1 à 7, comprenant en outre :
la détermination, par l'unité de traitement (202), d'un degré d'anomalie du premier relevé du capteur par application du modèle d'intelligence artificielle sur le premier relevé et le deuxième relevé ;
la détermination, par l'unité de traitement (202), si le degré d'anomalie du premier relevé est supérieur à un seuil ; et
le déclenchement, par l'unité de traitement (202), d'un processus de verrouillage de processus sur un processus industriel associé au capteur sur la base de la détermination que le premier relevé est supérieur au seuil.

9. Procédé selon l'une quelconque des revendications 1 à 7, comprenant en outre :
la réception, par l'unité de traitement (202), d'une première localisation du capteur dans l'installation technique (106) ;
la réception, par l'unité de traitement (202), d'une deuxième localisation de l'utilisateur dans l'installation technique (106) ;
la cartographie, par l'unité de traitement (202), de la première localisation et de la deuxième localisation sur une carte de l'installation technique (106) ;
la génération, par l'unité de traitement (202), d'un parcours de navigation entre la première localisation et la deuxième localisation ; et
l'affichage, par l'unité de traitement (202), du parcours de navigation généré et de la carte de l'installation technique (106), via un dispositif d'affichage.

10. Procédé selon l'une quelconque des revendications 1 à 8, comprenant en outre :
la réception, par l'unité de traitement (202), d'une image depuis un casque de réalité augmentée (126) ;
la détermination, par l'unité de traitement (202), du capteur (108N) dans l'image sur la base d'une application d'un algorithme de détection d'objet sur l'image reçue ; et
l'affichage, par l'unité de traitement (202), d'une notification que le capteur (108N) est dans l'état non étalonné sur la base de la détermination que le capteur est dans l'état non étalonné.

11. Procédé selon la revendication 2, comprenant en outre :
la validation, par l'unité de traitement (202), de l'un des éléments de données d'étalonnage reçus par application de l'algorithme d'intelligence artificielle sur ledit élément de données d'étalonnage reçu.

12. Système de commande industriel (102) destiné au réétalonnage d'une pluralité de capteurs dans une installation technique, le système de commande industriel (102) comprenant :
une unité de traitement (202) ; et
une mémoire (204) couplée à l'unité de traitement (202), la mémoire comprenant un module de réétalonnage de capteurs (112) stocké sous la forme d'instructions lisibles par machine exécutables par le ou les processeurs, le module de réétalonnage de capteurs (112) étant apte à réaliser un procédé selon l'une quelconque des revendications 1 à 11.

13. Environnement industriel (100) comprenant :
un système de commande industriel (102) tel que revendiqué à la revendication 12 ;
une installation technique (106) comprenant un ou plusieurs composants physiques ; et
une pluralité d'interfaces homme-machine (120A-N) couplées en communication avec le système de commande industriel (102) via un réseau (104).

14. Produit programme d'ordinateur, dans lequel sont stockées des instructions lisibles par machine qui, lorsqu'elles sont exécutées par une unité de traitement (202), amènent les processeurs à réaliser un procédé selon l'une quelconque des revendications 1 à 11.
